# EUROPÄISCHE PATENTANMELDUNG

(11) **EP 1 837 643 A2**
(43) Veröffentlichungstag der Anmeldung: **26.09.2007**
(21) Anmeldenummer: 07005899.5
(22) Anmeldetag: 22.03.2007
(51) Int. Cl.: G01N 21/85

(54) **Vorrichtung zur Analyse, insbesondere fotometrischen oder spektralfotometrischen Analyse**

(30) Priorität: 23.03.2006 DE 102006013341
(71) Anmelder: J & M Analytische Mess- Und Regeltechnik GmbH, 73431 Aalen (DE); GEA Buck Valve GmbH, 79379 Müllheim (DE)
(72) Erfinder: Joachim, Mannhardt, 73569 Eschach (DE); Trevor, Page, Southampton, SO454RA, Hampshire (GB); Martin, Koch, 79395 Neuenburg (DE)
(74) Vertreter: Lorenz, Markus

(57) **Zusammenfassung**

Eine Vorrichtung zur Analyse von in einem mit einem Kopplungselement versehenen Behältnis sich befindenden zu analysierendem Produkt, insbesondere zur fotometrischen oder spektralfotometrischen Analyse von Pulver, Schüttgut, Granulat und ähnlichem, ist mit einem Andockelement zur dichtenden Verbindung mit dem Kopplungselement und mit einer in einem Sondengehäuse angeordneten Messsonde versehen, die mit wenigstens einem Strahlungs- oder Lichtmessglied, wenigstens einem im Strahlungsgang angeordneten Messfenster, das in einer Wandung des Sondengehäuses angeordnet ist, und mit wenigstens einem Detektionsglied für die Analyse versehen ist. Das Sondengehäuse mit der Messsonde ist derart ausgebildet und verschiebbar geführt, dass wenigstens ein Teil des Sondengehäuses, in welchem sich das Messfenster befindet, in das Behältnis zur Analyse einführbar ist.

## Beschreibung

Die Erfindung betrifft eine Vorrichtung zur Analyse eines Produktes, das sich in einem umweltisolierten und hierzu mit einem abdichtenden Kopplungselement versehenen Behälter befindet.

Die Erfindung betrifft auch ein Verfahren zur Analyse von einem umweltisoliert in einem Behältnis sich befindenden zu analysierenden Produkt.

In vielen Industriebereichen, wie zum Beispiel der chemischen, pharmazeutischen oder lebensmittelverarbeitenden Industrie werden Endprodukte aus ein oder mehreren Rohmaterialien oder Rohprodukten hergestellt.

Die Rohprodukte werden dabei zumeist in Behältnissen, wie Säcken oder auch in festen Behältern, in Form von Schüttgut als Pulver, Granulat, fluid oder ähnlichem zu dem Ort oder zu der Anlage gebracht, in welchem die Be- und Verarbeitung zu einem Zwischen- oder Endprodukt erfolgen soll.

Häufig sind diese Rohprodukte jedoch in einer konzentrierten Form vorhanden, die umwelt- und/oder gesundheitsbelastend ist. Aus diesem Grund werden Umfüll- oder Abfüllvorgänge möglichst so durchgeführt, dass eine Kontamination des Produkts und/oder der Umwelt und auch eine Gesundheitsgefährdung durch das Produkt vermieden wird.

Hierzu ist zum Beispiel in der EP 1 441 953 B1 das Behältnis, in welchem sich das Rohprodukt befindet, mit einer abgedichteten Andockeinrichtung zu versehen, durch die ein Um- oder Abfüllen unter einem sogenannten "total containment" durchgeführt wird, wobei eine umweltisolierte Abdichtung beibehalten bleibt. Die Andockeinrichtung besteht dabei aus einem ersten Kopplungselement, das mit dem Behältnis verbunden ist, und einem zweiten Kopplungselement bzw. einem Andockelement zur dichtenden Verbindung mit dem Behältnis, von welchem aus das angelieferte Rohprodukt um- oder abgefüllt werden soll. Die Umfüllung durch eine Verbindung der beiden Behältnisse bzw. Behälter miteinander über die Kopplungselemente erfolgt dabei dadurch, dass jedes Kopplungselement elastisch derart verformbar ist, dass nur zum Umfüllen Verbindungsöffnungen freigegeben werden.

Neben den Abfüll- bzw. Umfüllvorgängen, die - wie erwähnt - umweltisoliert stattfinden sollen, besteht häufig auch die Notwendigkeit, das angelieferte Produkt zu analysieren, wie zum Beispiel dessen Zusammensetzung, Konzentration, Reinheitsgrad und dergleichen. Für diesen Zweck musste deshalb das Behältnis geöffnet werden, wobei Proben möglichst ohne große Kontamination und Umweltbelastung entnommen wurden, damit es anschließend in einem Analyselabor untersucht werden konnte. Bei dieser Analysemethode konnte jedoch eine Kontamination und/oder ein Austritt oder ein Freisetzen des zu analysierenden Produkts nicht sicher verhindert werden.

Der vorliegenden Erfindung liegt die Aufgabe zugrunde, eine Vorrichtung zur Analyse eines Produktes, das sich in einem umweltisolierten Behältnis befindet, zu schaffen, mit welcher die Analyse derart durchgeführt werden kann, dass eine Umweltisolierung bzw. Abdichtung gegenüber der Umwelt auch im Falle von notwendigen Analysen sicher beibehalten bleibt.

Der Erfindung liegt auch die Aufgabe zugrunde, ein Verfahren zur Analyse eines Produktes, das sich in einem umweltisolierten Behältnis befindet, zu schaffen, mit welchem die Umweltisolierung bzw. Abdichtung beibehalten bleibt.

Erfindungsgemäß wird diese Aufgabe mit einer Vorrichtung zur Analyse mit den in Anspruch 1 genannten Merkmalen gelöst.

In Anspruch 23 ist ein Verfahren zur Analyse von einem umweltisoliert in einem Behältnis befindenden zu analysierendem Produkt beschrieben, das ebenfalls unter Beibehaltung der Abdichtung und Umweltisolierung durchgeführt werden kann.

Mit der erfindungsgemäßen Vorrichtung und dem Verfahren lässt sich auch in Fällen, in welchen das angelieferte Produkt noch einer Analyse unterzogen werden muss, trotzdem ein "total containment" beibehalten.

Anstelle einer Probenentnahme und einer externen Analyse in einem Labor wird die erfindungsgemäße mit einem Andockelement versehene Vorrichtung unter Beibehaltung der Abdichtung mit ihrem Sondengehäuse, in welchem die Messsonde angeordnet ist, über das gleiche Kopplungselement in dem Behältnis angebracht, das ansonsten für die Um- oder Abfüllung des Produktes verwendet wird.

Wenn das Produkt nach seiner Bearbeitung oder Verarbeitung wieder in großen Mengen in Behältnissen abtransportiert wird, lässt sich mit der erfindungsgemä-ßen Vorrichtung in gleicher Weise neben der zuvor erwähnten Eingangskontrolle auch eine Endqualitätskontrolle durchführen, wenn das Behältnis, in welchem sich das bearbeitete Produkt befindet, ebenfalls entsprechend mit einem Kopplungselement versehen ist, mit dem dann die erfindungsgemäße Vorrichtung mit ihrem Andockelement verbunden werden kann. Auch in diesem Fall wird eine Umweltbeeinflussung und/oder Kontamination des bearbeiteten Produktes sicher vermieden.

Falls neben der Abdichtung durch das Kopplungselement und das Andockelement während des Messverfahrens eine Abdichtung nach außen noch sicherer gewünscht wird, kann vorgesehen sein, dass zwischen dem Sondengehäuse und dem Führungsgehäuse wenigstens noch eine zusätzliche Dichtung angeordnet ist.

In einer vorteilhaften Ausgestaltung der Erfindung kann vorgesehen sein, dass das wenigstens eine Messfenster in wenigstens einem Teilbereich einer Umfangswand des Sondengehäuses angeordnet ist.

Durch eine derartige Anordnung von ein oder mehreren Messfenstern lassen sich im Bedarfsfalle Messungen über 360° durchführen und/oder verschiedene Messverfahren jeweils für einen bestimmten Bereich des Behältnisses.

Ein weiterer Vorteil der Anordnung des wenigstens einen Messfensters in einer Umfangswand, zum Beispiel einer zylindrischen Umfangswand des Sondengehäuses, besteht darin, dass beim Zurückziehen der Messsonde aus dem Behältnis dieses beim Vorbeistreifen an dem elastischen Kopplungselement und dem Andockelement, gegebenenfalls zusätzlich noch an einer separaten Dichtung, gereinigt werden kann.

In einer weiteren vorteilhaften Ausgestaltung der Erfindung kann vorgesehen sein, dass sich zwischen einer vorderen Stirnseite des Sondengehäuses und dem in der Umfangswand angeordneten Messfenster eine Dichtkappe befindet, die sich in einer zurückgezogenen Position der Messsonde, in der sich das Messfenster außerhalb des Behältnisses befindet, wenigstens teilweise noch in von dem Kopplungselement freigegebenen Bereich einer Öffnung im Inneren des Behältnisses befindet und damit die Öffnung abdeckt.

Durch die Dichtkappe wird aufgrund der Abdichtung der Öffnung in das Behältnis eine Zwischenposition geschaffen, in der es möglich ist, die Bereiche der Messsonde, insbesondere des Sondengehäuses, welche mit dem Produkt in Berührung gekommen sind, zu reinigen, bevor die Vorrichtung wieder vollständig abgenommen wird.

Eine derartige Reinigung kann zum Beispiel durch eine Spüleinrichtung vorgesehen sein, welche zum Beispiel eine Spülmittelkammer aufweist, die in einem Zwischenraum zwischen dem Sondengehäuse und dem Führungsgehäuse wenigstens in dem Bereich des Messfensters angeordnet ist. Hierzu kann die Spülmittelkammer entsprechend mit einem Zulauf und wenigstens einem Ablauf für Spülmittel versehen sein.

Vorteilhafte Weiterbildungen und Ausgestaltungen der Erfindung ergeben sich aus den übrigen Unteransprüchen und aus dem nachfolgend anhand der Zeichnung prinzipmäßig beschriebenen Ausführungsbeispiel.

Es zeigt:
- Fig. 1: eine perspektivische Ansicht eines Behältnisses mit einem Kopplungselement;
- Fig. 2: eine Draufsicht auf das Kopplungselement nach der Fig. 1 im teilgeöffneten Zustand;
- Fig. 3: die erfindungsgemäße Vorrichtung mit einem Andockelement, das mit dem Kopplungselement des Behältnisses verbunden ist;
- Fig. 4: ausschnittsweise den unteren Bereich der Vorrichtung nach der Fig. 3 mit dem Andockelement in perspektivischer Darstellung; und
- Fig. 5: die erfindungsgemäße Vorrichtung nach der Fig. 3 in einer Position, in der ein Messgehäuse mit einer Messsonde in das Behältnis eingeführt ist.

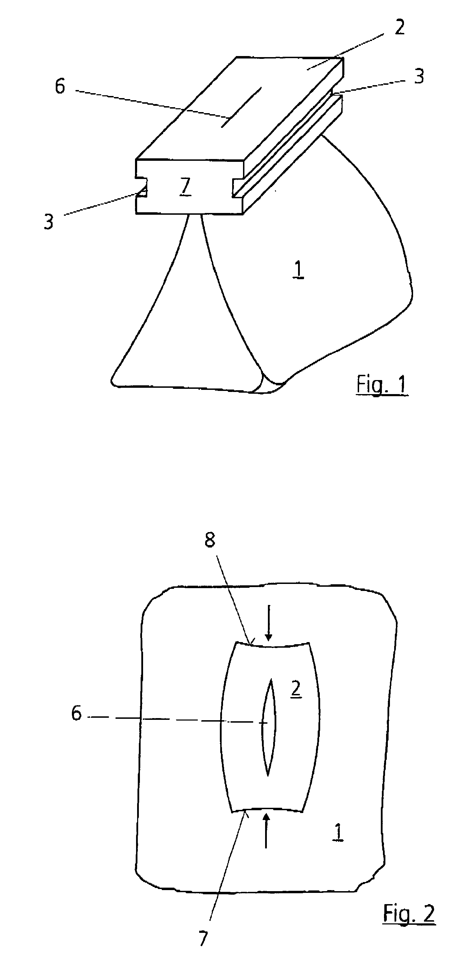

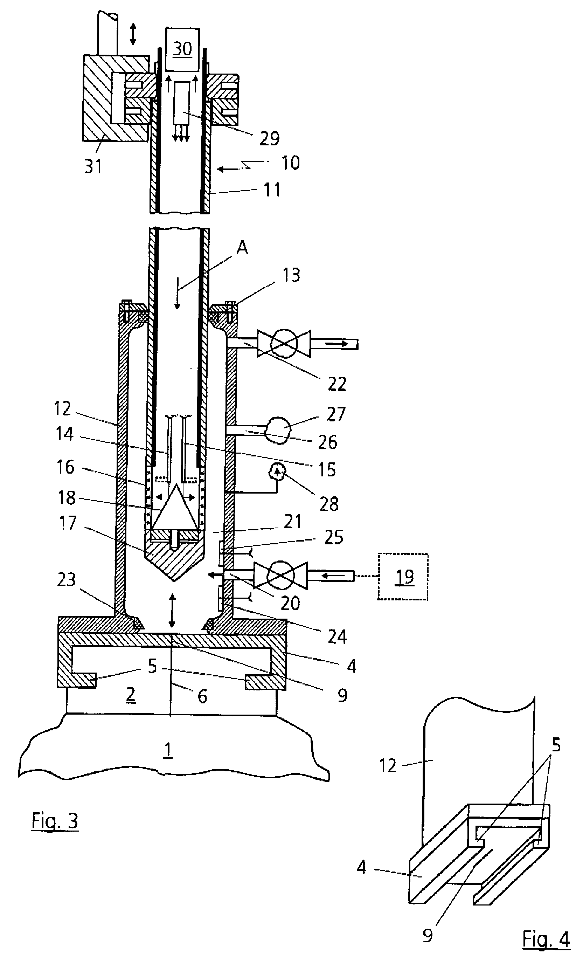

Ein in den Figuren 1 und 2 dargestelltes Behältnis 1 ist mit einem Kopplungselement 2 versehen. Aufbau und Ausgestaltung des Kopplungselements 2 sind aus der EP 1 441 953 B1 bekannt, weshalb an dieser Stelle nur kurz darauf eingegangen wird. Die EP 1 441 953 B1 stellt ebenfalls einen Offenbarungsgehalt zu der vorliegenden Anmeldung dar. Das Kopplungselement 2 ist - wie ersichtlich - in Form eines länglich ausgestalteten Elastomerkörpers ausgebildet und besitzt seitlich Führungsnuten 3, in die zur Verbindung mit einem anderen Behälter oder einer anderen Vorrichtung ein zweites Kopplungs- oder Andockelement 4 (siehe Figuren 3 bis 5) mit einem Gegenprofil zu den Führungsnuten 3 aufgeschoben werden kann, wodurch eine Entnahme oder Umfüllung von in dem Behältnis 1 sich befindenden Produkt ermöglicht wird. Hierzu weist das Andockelement 4 entsprechend seitlich Kanten 5 auf, die so ausgeformt sind, dass sie in die Nuten 3 des Kopplungselements 2 verschieblich eingepasst werden können. Diese an sich bekannte Verbindungsart stellt eine Art Schwalbenschwanzverbindung dar und ergibt damit eine sichere, jedoch leicht lösbare Verbindung. Das Kopplungselement 2 ist zwischen den beiden Seitenflächen mit einem Schlitz 6 versehen, der durchgängig von der Oberseite bis zur Unterseite ausgeführt ist und sich über einen Teilbereich der Länge des Kopplungselements 2 erstreckt.

Wenn das Kopplungselement 2 keinen äußeren Kräften ausgesetzt ist, befindet es sich in seinem geschlossenen Zustand, in dem der Schlitz 6 ebenfalls dicht verschlossen ist. In diesem geschlossenen Zustand ist das Innere des Behältnisses 1 mit dem Produkt gegenüber der Umgebung abgedichtet. Um eine noch sicherere Abdichtung zu gewährleisten und auch beim Transport oder bei der Handhabung ein versehentliches öffnen des Schlitzes 6 zu vermeiden, kann zusätzlich noch auf das Kopplungselement 2 ein Verriegelungselement aufgesetzt werden, durch das der Schlitz 6 noch zusätzlich abgedichtet wird. In der EP 1 441 953 B1 ist ein derartiges Verriegelungselement beispielsweise beschrieben. Anstelle des Verriegelungselementes wird dann später für das nachfolgend noch näher beschriebene Analyseverfahren das Andockelement 4 aufgeschoben.

Die Fig. 2 zeigt das Kopplungselement 2 in teilweise geöffnetem Zustand. Dieser Zustand ergibt sich dann, wenn das Kopplungselement 2, das entsprechend elastisch ausgebildet ist, mit einer Kraft in den dargestellten Pfeilrichtungen auf seiner Vorderseite 7 und seiner Rückseite 8 beaufschlagt wird. Bei dieser Druckbeaufschlagung verformt sich das Kopplungselement 2 entsprechend derart, dass der Schlitz 6 sich zu einem größeren Spalt öffnet.

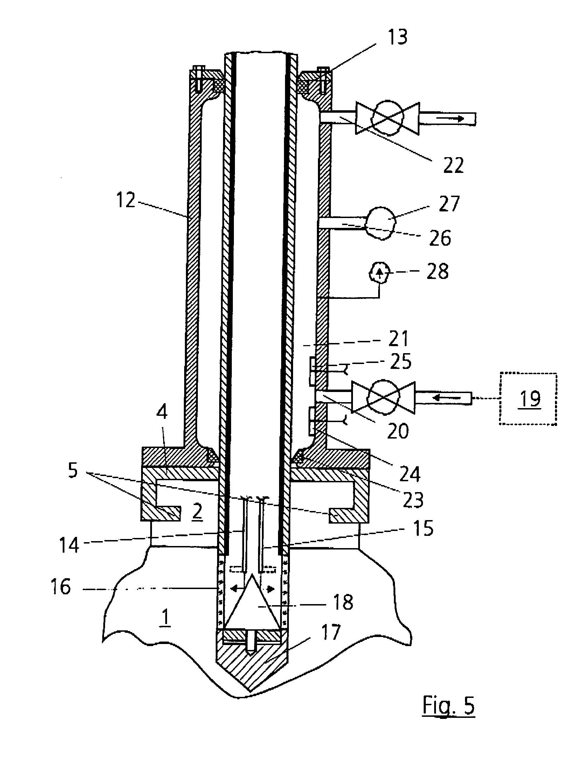

Um eine Abdichtung beizubehalten, wird dieser Öffnungsvorgang durch eine entsprechende Druckbeaufschlagung selbstverständlich nur dann durchgeführt, wenn entsprechend ein zweites Kopplungselement oder im vorliegenden Fall das Andockelement 4 aufgesetzt wird. Hierzu ist das Andockelement 4 ebenfalls als Elastomerkörper mit im wesentlichen den gleichen Maßen ausgebildet wie das Kopplungselement 2. Zur Verbindung wird das Andockelement 4 von einer Seite her entsprechend auf das Kopplungselement 2 abgeschoben, wobei gegebenenfalls gleichzeitig in diesem Fall ein sich auf dem Kopplungselement 2 befindendes, nicht dargestelltes Verriegelungselement heruntergeschoben wird. Das Andockelement 4 weist ebenfalls einen Schlitz 9 auf, der mit dem Schlitz 6 hinsichtlich seiner Lage und Länge korrespondiert. Das Andockelement 4 ist mit der in den Figuren 3 und 5 beschriebenen Vorrichtung zur Analyse verbunden.

Die Vorrichtung weist eine Messsonde 10 mit einem Sondengehäuse 11 auf, die mit verschiedenen Einrichtungen zur Analyse des in dem Behältnis 1 sich befindenden und zu analysierendem Produkt versehen ist. Statt einem sackartigen Behältnis 1 kann selbstverständlich auch jede andere Behälterform vorgesehen sein. Wesentlich ist lediglich ein Kopplungselement 2 an dem Behältnis 1, das mit dem Andockelement 4 kompatibel ist. Die Messsonde 10 ist durch ein Führungsgehäuse 12, z. B. einer geschlossenen Zylinderführung, und einen Abdichtring 13, der in der hinteren Stirnwand des Führungsgehäuses 12 angeordnet ist, nach außen hin abdichtet. Das Führungsgehäuse 12 stellt gleichzeitig auch eine Führung für das Sondengehäuse 11 und damit für die Messsonde 10 dar. Das Sondengehäuse 11 und das Führungsgehäuse 12 sind zylinderförmig ausgebildet und die Messsonde 10 ist zusammen mit dem Sondengehäuse 11 in axialer Richtung gegenüber dem Führungsgehäuse 12 verschiebbar, wodurch sie in das Innere des Behältnisses 1 eintauchen kann, wie nachfolgend näher beschrieben wird.

Grundsätzlich ist der Aufbau der Messsonde 10 von bekannter Bauart, weshalb nachfolgend nur die für die Erfindung wichtigen Teile näher beschrieben sind.

Im Inneren der Messsonde 10 sind beispielsweise mehrere gleichmäßig über den Umfang verteilt angeordnete Sendelichtleiter 14 und ein oder mehrere Empfängerlichtleiter als Detektionsglieder 15 angeordnet. Dabei kann jeder Lichtleiter im Bedarfsfalle auch aus einer Kombination von mehreren Lichtleitern bestehen bzw. aus einem Bündel von Lichtleitern, um die verschiedenen bekannten Messmethoden, wie z. B. Raman, Fluoreszenz, LIF, LIBS, durchzuführen. Je nach Ausgestaltung der Lichtleiter können auch verschiedene Kombinationen von Messmethoden mit unterschiedlichen Lichtleiterkonfigurationen durchgeführt werden, wie z. B. Messungen in Reflexion und Fluoreszenzmessungen. Gegebenenfalls werden hierzu die dazugehörigen Lichtleiter an entsprechende Detektoren (nicht dargestellt) angekoppelt. Die Sende- und Empfangslichtleiter 14 bzw. 15 sind in bekannter Weise mit Anschlüssen versehen, über welche dann eine Verbindung mit einer nicht näher dargestellten Prüf- und Auswerteeinheit erfolgt.

Im vorderen, in das Behältnis 1 eintauchenden Bereich des Sondengehäuses 11 der Messsonde 10 sind in der Umfangswand des Sondengehäuses 11 ein oder mehrere Messfenster 16 angeordnet. Wenn sich das Messfenster 16 in Ringform über den gesamten Umfang des Sondengehäuses 11 erstreckt, sind 360°-Messungen möglich. Als Material für das oder die Messfenster 16 ist ein Material zu verwenden, das gegenüber aggressiven Medien beständig ist, wie z. B. Saphir oder Quarz. An das oder die Messfenster 16 schließt sich für einen stirnseitigen Abschluss des Sondengehäuses 11 eine Dichtkappe 17 an, das auf nicht näher dargestellte Weise dicht mit dem oder den Messfenstern 16 und mit dem übrigen Sondengehäuse 11 verbunden ist, damit eine Abdichtung hergestellt ist. Als Befestigung kann z. B. eine nicht dargestellte Schraubverbindung mit Abdichtelementen vorgesehen sein. In der Dichtkappe 17 kann auch bei Bedarf noch ein Temperaturfühler angeordnet sein, um die Temperatur im Innenraum des Behältnisses 1 mit dem zu analysierenden Produkt zu messen.

Zur Umlenkung der von dem oder den Sendelichtleitern 14 erzeugten Strahlen ist im Inneren der Messsonde 10 im Bereich des oder der Messfenster 16 eine Strahlungsumlenkeinrichtung in Form von ein oder mehreren Umlenkspiegeln 18 angeordnet. Die Umlenkspiegel 18 können z. B. über den Umfang verteilt in einem Winkel von 45° zur Längsachse der Messsonde 10 und des Sondengehäuses 11 ausgerichtet sein, damit die axial eintreffenden Strahlen in radialer Richtung umgelenkt und auf diese Weise radial aus dem oder den Messfenstern 16 austreten können, und damit das zu analysierende Produkt entsprechend analysiert werden kann. Die Umlenkspiegel 18 dienen gleichzeitig auch zur Umlenkung von in dem Behältnisinneren reflektierten Strahlungen und weiteren Messwerten, die über den oder die Empfängerlichtleiter 15 zu der nicht dargestellten Auswerteeinheit zurückgeleitet werden.

Anstelle von mehreren über den Umfang verteilt angeordneten Spiegeln kann auch eine Spiegeleinheit in Kegelform, Kegelstumpfform oder Pyramidenform verwendet werden, wobei entsprechende Spiegelflächen vorgesehen sind. Bei Verwendung von mehreren Messfenstern 16 oder einem Messfenster 16, das sich über 360° erstreckt, kann in Verbindung mit mehreren Spiegeln 18 oder Spiegelflächen eine Kombination von verschiedenen Messverfahren gleichzeitig durchgeführt werden, wenn entsprechend mehrere Empfängerlichtleiter 15 vorgesehen sind.

Im Bedarfsfall können eine Vielzahl von Sendelicht- oder Empfangslichtleitern 14 und 15 für die unterschiedlichsten Messungen und Analysen im Inneren des Sondengehäuses 11 vorgesehen sein. So können beispielsweise sechs umfangsmäßig verteilt angeordnete Sendelichtleitern 14 und ein zentraler Empfängerlichtleiter 15 vorgesehen sein. Auch hier sind die verschiedensten Kombinationen möglich. Ebenso ist eine gleichmäßige Anordnung und Verteilung von Sendelicht- und Empfängerlichtleitern 14 bzw. 15 möglich. Deren Ausgestaltung und Anordnung richtet sich nach dem Einsatzzweck.

Gegebenenfalls kann die Anzahl der Sendelichtleiter 14 auch gegenüber den Empfangslichtleitern 15 überwiegen, um eine ausreichende Ausleuchtung eines Messbereiches sicherzustellen. Das Sondengehäuse 11 mit der Messsonde 10 kann stufenlos oder in Rastern in den Innenraum des Behältnisses 1 eintauchen.

Die Fig. 3 zeigt die Position der Messsonde 10, in der sie sich in einer noch nicht eingeschobenen Position befindet.

Von der in der Fig. 3 dargestellten Position der Messsonde 10 aus wird diese für Messungen und zur Analyse in das Innere des Behältnisses 1 mit dem Bereich des Sondengehäuses 11 eingeschoben, in welchem sich ein oder mehrere Messfenster 16 befinden. Hierzu wird die Messsonde 10 mit dem Sondengehäuse 11 in Pfeilrichtung A in axialer Richtung im Inneren des Führungsgehäuses 12 verschoben. Da die Dichtkappe 17 an der vorderen Stirnwand des Sondengehäuses 11 eine Keilform besitzt oder kegelförmig ausgebildet ist, und auch das mit dem Schlitz 9 versehene Andockelement 4 elastisch nachgiebig ausgebildet ist, kann die Messsonde 10 durch eine entsprechende Aufweitung des Schlitzes 9 und des Schlitzes 6 des Kopplungselements 2 in das Innere des Behältnisses 1 eintauchen.

Die axiale Eintauchung der Messsonde 10 erfolgt so weit, dass sich das oder die Messfenster 16 im Inneren des Behältnisses 1 befinden und entsprechende Messungen und Analysen durchgeführt werden können.

Je nach Länge des Sondengehäuses 11 kann die Messsonde 10 entsprechend tief in das Behältnis 1 eintauchen und damit auch ein Profil des Produktes über die Höhe erstellen. Aufgrund der Elastizität des Andockelements 4 und des Kopplungselements 2 mit der elastischen Aufweitung der beiden Schlitze 6 und 9 findet gleichzeitig auch eine Abdichtung während des Messverfahrens statt, da sich die Schlitzwandungen dichtend an das Sondengehäuses 11 anlegen können. Darüber hinaus dient auch ein Dichtring 23 für eine sichere Abdichtung.

In der in der Fig. 3 dargestellten Position kann auch durch eine nicht näher dargestellte Reinigung des oder der Messfenster 16 und der Außenwandung des Sondengehäuses 11 nach einer Analyse durch eine nicht näher dargestellte Spüleinrichtung 19 erfolgen. Von der Spüleinrichtung 19 aus wird hierzu Spülmedium über einen oder mehrere in dem Führungsgehäuse 12 angeordnete Kanäle 20 in einen Zwischenbereich 21 zwischen der Innenwand des Führungsgehäuses 12 und der Außenwand des Sondengehäuses 11 eingeleitet und daraus auch wieder über ein oder mehrere Auslasskanäle 22 abgeleitet.

Wie aus den Positionierungen gemäß Darstellung in den Figuren 3 und 5 ersichtlich, kann die Reinigung des oder der Messfenster 16 auch bereits dann durchgeführt werden, wenn die auf der Stirnseite des Sondengehäuses 11 angeordnete Dichtkappe 17 als Dichtelement sich wenigstens noch teilweise im Inneren des Behältnisses befindet und damit noch eine Abdichtung zum Inneren des Behältnisses 1 bestehen bleibt. Andererseits befindet sich in dieser Position der Bereich des oder der Messfenster 16 außerhalb des Behältnisses 1 und kann auf diese Weise gereinigt werden.

Gleichzeitig ist es in der Position gemäß Fig. 3 auch möglich, im Bedarfsfalle weitere Messverfahren mit spezifischem Referenzmaterial, z. B. durch eine Weißabgleicheinrichtung, durchzuführen. Hierzu kann z. B. ein nicht näher dargestelltes Weißstandard-Kalibrierungselement 24 vorgesehen sein, wobei in einer zweiten Kalibrierungsposition ein gleicher oder ein anderer Sensor einen Vergleich mit einem Schwarzstandard-Kalibrierungselement vornimmt. Ebenso ist es auch möglich, mit einer entsprechend nicht näher dargestellten Kalibriereinrichtung 25, die ebenso wie die Weißabgleicheinrichtung 24 in dem führungsgehäuse 12 vorgesehen ist, nicht näher erläuterte Kalibrierarbeiten durchzuführen. Grundsätzlich sind derartige Messverfahren und Kalibrierungsarbeiten jedoch allgemein bekannt.

Produkt aus dem Inneren des Behältnisses 1, das an der Außenwand des Sondengehäuses 11 anhaftet, kann während des Zurückziehens der Messsonde 10 an dem als Abstreifring ausgebildeten Dichtteil 23 abgeschabt werden.

Der Zwischenraum 21 kann auch über einen Druckanschluss 26 mit einer Druckluftquelle 27 verbunden sein. Durch Zugabe von Druckgas in den Zwischenraum 21 kann nach einer Reinigung des Messfensters 16 und des übrigen Bereiches des Sondengehäuses 11 eine Trocknung erreicht werden. Wenn zusätzlich noch ein Anschluss zu einer Gasdruckprüfeinrichtung 28 vorhanden ist, dann kann auch eine Druckprüfung des Zwischenraums 21 auf Dichtigkeit durchgeführt werden.

Aus der Figur 3 ist weiterhin prinzipmäßig auch eine Lichtquelle 29 ersichtlich, die mit den Sendelichtleitern 14 verbunden ist.

Ein faseroptischer Kollektor 30 kann zum Empfang des über die Empfangslichtleiter 15 zurückgesandten Lichtes bzw. der Strahlen vorgesehen sein.

Anstelle einer Strahlumlenkeinrichtung, z.B. mit dem dargestellten Umlenkspiegel 18, können die Sendelichtleiter 14 und die Empfangslichtleiter 15 in ihren unteren Bereichen, d. h. in dem Bereich des Messfensters 16, auch aus ihren axialen Richtungen in eine radiale Richtung oder auch schräg so umgelenkt werden, dass eine direkte Weiterleitung der Strahlen bzw. des Lichtes und auch ein direkter Empfang erfolgt (siehe gestrichelte Darstellung der Umleitung von jeweils einem Sende- und einem Empfangslichtleiter in der Fig. 3).
In der Figur 3 ist auch ein Aktuator 31 dargestellt, durch den die Messsonde 10 in das Behältnis 1 eingetaucht und auch aus diesem wieder teilweise oder ganz entfernt werden kann.

Das Führungsgehäuse 12 und das Sondengehäuse 11 müssen selbstverständlich nicht kreisförmig ausgebildet sein, sondern können im Bedarfsfalle auch - im Querschnitt gesehen - eine ovale, eckige oder auch eine andere Form aufweisen.

Das Kopplungselement 2 und auch das Andockelement 4 müssen selbstverständlich nicht vollständig elastisch ausgebildet sein und die Schlitze müssen auch nicht unbedingt durch Krafteinwirkungen von außen entsprechend den Pfeilen in Fig. 2 geöffnet werden. Wesentlich ist lediglich, dass beide Elemente wenigstens im Bereich der Schlitze 6 und 9 derart elastisch sind, dass die Schlitze 6 und 9 elastisch zu einem Spalt aufgeweitet werden können, durch die die Messsonde 10 eingeschoben werden kann, was insbesondere auch durch die keilförmige oder kegelförmige Form der Dichtkappe 17 erleichtert wird.

Da sich die Messsonde 10 im Inneren des Führungsgehäuses 12 befindet und nach außen abgedichtet ist, muss das Andockelement 4 auch nicht unbedingt durch einen geschlossenen Schlitz 9 im nicht aktivierten Zustand abgedichtet sein, sondern kann gegebenenfalls auch eine Öffnung in der Größe des Durchmessers des Messsondengehäuses 11 aufweisen. Beim Verbinden der Analysevorrichtung mit dem Kopplungselement 2 über das Andockelement 4 muss dann die Dichtkappe 17 lediglich den Spalt 6 des Kopplungselements 2 aufweiten, um eine umweltdichte Verbindung zwischen der Messsonde 10 und dem Inneren des Behälters 1 herzustellen.

In der zurückgeschobenen Position der Messsonde 10 können Systemprüfungen entsprechend allgemein bekannter Prüfstandards vorgenommen werden. Neben einer Kalibrierung sind somit auch Systemchecks und neben einer Reinigung auch eine Trocknung der Messsonde 10 bzw. des Sondengehäuses 11 möglich.

## Patentansprüche

1. Vorrichtung zur Analyse eines Produktes, das sich in einem umweltisolierten und hierzu mit einem abdichtenden Kopplungselement (2) versehenen Behältnis (1) befindet, insbesondere zur fotometrischen und/oder spektralfotometrischen Analyse von Pulver, Schüttgut, Granulat und ähnlichem, mit einem Andockelement (4) zur dichtenden Verbindung mit dem Kopplungselement (2), mit einer in einem Sondengehäuse (11) angeordneten Messsonde (10), die mit wenigstens einem Strahlungs- oder Lichtmessglied (14), wenigstens einem im Strahlungsgang angeordneten Messfenster (16), das in einer Wandung des Sondengehäuses (11) angeordnet ist, und mit wenigstens einem Detektionsglied für die Analyse, wobei das Sondengehäuse (11) mit der Messsonde (10) derart ausgebildet und in einem Führungsgehäuse (12) verschiebbar geführt ist, dass wenigstens ein Teil des Sondengehäuses (11), in welchem sich das Messfenster (16) befindet, durch das Andockelement (4) und das Kopplungselement (2) hindurch in das Behältnis (1), in welchem sich das zu analysierende Produkt befindet, zur Analyse einführbar ist.

2. Vorrichtung nach Anspruch 1,
**dadurch gekennzeichnet , dass**
zwischen dem Sondengehäuse (11) und dem Führungsgehäuse (12) wenigstens eine Dichtung (13,23) angeordnet ist.

3. Vorrichtung nach Anspruch 1 oder 2,
**dadurch gekennzeichnet , dass**
das wenigstens eine Messfenster (16) in wenigstens einem Teilbereich einer Umfangswand des Sondengehäuses (11) angeordnet ist.

4. Vorrichtung nach Anspruch 3,
**dadurch gekennzeichnet , dass**
sich zwischen einer vorderen Stirnseite des Sondengehäuses (11) und dem in der Umfangswand angeordneten Messfenster (16) eine Dichtkappe (17) befindet, die sich in einer zurückgezogenen Position der Messsonde (10), in der sich das Messfenster (16) außerhalb des Behältnisses (1) befindet, wenigstens teilweise noch in von dem Kopplungselement (2) freigegebenen Bereich einer Öffnung im Inneren des Behältnisses (1) befindet und damit die Öffnung abdeckt.

5. Vorrichtung nach Anspruch 4,
**dadurch gekennzeichnet , dass**
das Führungsgehäuse (12) mit einem Dichtteil (23) versehen ist, das mit dem Messfenster (16) und/oder der Dichtkappe (17) des Sondengehäuses (11) zusammenarbeitet.

6. Vorrichtung nach Anspruch 4 oder 5,
**dadurch gekennzeichnet, dass**
die Dichtkappe (17) keilförmig oder in Kegelform ausgebildet ist.

7. Vorrichtung nach Anspruch 6,
**dadurch gekennzeichnet , dass**
das Dichtteil (23) als Abstreifring ausgebildet ist.

8. Vorrichtung nach einem der Ansprüche 1 bis 7,
**dadurch gekennzeichnet , dass**
eine Spüleinrichtung (19) zum Reinigen wenigstens des Messfensters (16) der Messsonde (10) in der zurückgezogenen Position der Messsonde (10) vorgesehen ist, wobei die Spüleinrichtung (19) eine Spülmittelkammer (21) aufweist, die in einem Zwischenraum zwischen dem Sondengehäuse (11) und dem Führungsgehäuse (12) wenigstens in dem Bereich des Messfensters (16) angeordnet ist.

9. Vorrichtung nach Anspruch 8,
**dadurch gekennzeichnet, dass**
die Messsonde (16) zur Reinigung der Dichtkappe (17) in eine Position einschiebbar ist, in der sich die Dichtkappe (17) innerhalb der Spülmittelkammer (21) befindet.

10. Vorrichtung nach einem der Ansprüche 1 bis 9,
**dadurch gekennzeichnet, dass**
das Führungsgehäuse (12) mit wenigstens einem Gasanschluss (26) zur Trockengaszuführung in das Innere des Führungsgehäuses (12) versehen ist.

11. Vorrichtung nach einem der Ansprüche 1 bis 10,
**dadurch gekennzeichnet, dass**
an oder in dem Führungsgehäuse (12) Referenz- und/oder Prüfglieder (24,25) angeordnet sind.

12. Vorrichtung nach Anspruch 11,
**dadurch gekennzeichnet , dass**
als Prüfglieder wenigstens eine Kalibriereinrichtung (25), insbesondere ein Weißstandard-Kalibrierungselement (24) für einen Weißstandard vorgesehen ist.

13. Vorrichtung nach einem der Ansprüche 1 bis 12,
**dadurch gekennzeichnet , dass**
die Messsonde (2) mit ein oder mehreren Sendelichtleitern (14) als Messglieder versehen ist, und dass als Detektionsglied ein oder mehrere Empfängerlichtleiter (15) vorgesehen sind.

14. Vorrichtung nach Anspruch 13,
**dadurch gekennzeichnet , dass**
die axial zugeführten Sende- und Empfängerlichtleiter (14,15) jeweils in ihrem vorderen, dem Behältnis (1) zugewandten Bereich wenigstens annähernd in radialer Richtung zu dem wenigstens einen Messfenster (16) hin umgelenkt sind.

15. Vorrichtung nach einem der Ansprüche 1 bis 14,
**dadurch gekennzeichnet, dass**
im Bereich des Messfensters (16) im Inneren des Sondengehäuses (11) wenigstens eine Strahlumlenkeinrichtung angeordnet ist.

16. Vorrichtung nach Anspruch 15,
**dadurch gekennzeichnet, dass**
als Strahlumlenkeinrichtung wenigstens ein Spiegel (18) vorgesehen ist, der derart angeordnet ist, dass axial über die Sendelichtleiter (14) einfallendes Licht oder Strahlung wenigstens annähernd in radiale Richtung umlenkbar ist.

17. Vorrichtung nach Anspruch 16,
**dadurch gekennzeichnet , dass**
der wenigstens eine Spiegel (18) wenigstens annähernd eine Pyramiden- oder Kegelform mit mehreren Spiegelflächen aufweist.

18. Vorrichtung nach Anspruch 16 oder 17,
**dadurch gekennzeichnet , dass**
mehrere über den Umfang verteilt angeordnete Spiegel (18) oder Spiegelflächen vorgesehen sind.

19. Vorrichtung nach einem der Ansprüche 1 bis 18,
**dadurch gekennzeichnet, dass**
die Strahlumlenkeinrichtung (18) drehbar oder schwenkbar ausgebildet ist.

20. Vorrichtung nach einem der Ansprüche 1 bis 19,
**dadurch gekennzeichnet , dass**
das Messfenster (16) aus Saphir oder Quarz gebildet ist.

21. Vorrichtung nach einem der Ansprüche 1 bis 20,
**dadurch gekenneichnet, dass**
das Andockelement (4) mit einer Öffnung (9), insbesondere in Schlitzform zur Durchführung der Messsonde (10) mit dem Sondengehäuse (11) versehen ist.

22. Vorrichtung nach Anspruch 21,
**dadurch gekennzeichnet, dass**
das Andockelement (4) wenigstens im Bereich der Öffnung (9) elastisch ausgebildet ist.

23. Verfahren zur Analyse von einem umweltisoliert in einem Behältnis (1) befindenden zu analysierendem Produkt, insbesondere zur fotometrischen oder spektralfotometrischen Analyse von Pulver, Schüttgut, Granulat und ähnlichem, wobei das Behältnis (1) durch ein öffenbares Kopplungselement (2) und über ein Andockelement (4) mit einem Sondengehäuse (11), in dem sich eine Messsonde (10) befindet, umweltdicht verbunden wird, wobei die Messsonde (10) mit wenigstens einem Strahlungs- oder Lichtmessglied (14), wenigstens einem im Strahlungsgang angeordneten Messfenster (16) und mit wenigstens einem Detektionsglied (15) für die Analyse versehen ist, wobei das Sondengehäuse (11) mit der Messsonde (10) im Inneren eines Führungsgehäuses (12) verschieblich geführt und zur Messung durch das Andockelement (4) und das Kopplungselement (2) hindurch in das Behältnis (1), in welchem sich das zu analysierende Produkt befindet, eintaucht, wonach durch das wenigstens eine Messfenster (16) Messungen durchgeführt werden.

24. Verfahren nach Anspruch 23,
**dadurch gekennzeichnet, dass**
nach Durchführung von Messungen und Analysen zu Reinigungszwecken das Sondengehäuse (11) mit der Messsonde (10) soweit aus einer Öffnung des Behältnisses (1) zurückgezogen wird, dass sich das Messfenster (16) wieder außerhalb des Behältnisses (1) befindet.

25. Verfahren nach Anspruch 24,
**dadurch gekennzeichnet, dass**
bei der teilweisen Rückführung der Messsonde (10) aus dem Behältnis (1) das Sondengehäuse (11) der Messsonde (10) an einem Abstreifring als Dichtteil (23) vorbeigeführt wird.

26. Verfahren nach Anspruch 24 oder 25,
**dadurch gekennzeichnet , dass**
zur Reinigung wenigstens des in dem Sondengehäuse (11) angeordneten Messfensters (16) der Messsonde (10) Reinigungsmittel in einen Zwischenraum (21) zwischen dem Führungsgehäuse (12) und dem Sondengehäuse (11) der Messsonde (10) eingeleitet wird.

27. Verfahren nach einem der Ansprüche 24 bis 26,
**dadurch gekennzeichnet, dass**
in der zurückgezogenen Position der Messsonde (10) eine Kalibrierung durchgeführt wird und/oder Trockengas in das Innere des Führungsgehäuses (12) eingeleitet wird.
